# EUROPÄISCHE PATENTSCHRIFT

(11) **EP 2 558 899 B1**
(45) Veröffentlichungstag und Bekanntmachung des Hinweises auf die Patenterteilung: **12.12.2018**
(21) Anmeldenummer: 11713818.0
(22) Anmeldetag: 12.04.2011
(51) Int. Cl.: G02B 21/32, G01N 1/28

(54) **MIKROMANIPULATIONSSYSTEM MIT SCHUTZVORRICHTUNG FÜR KAPILLAREN**
MICROMANIPULATION SYSTEM WITH PROTECTION DEVICE FOR CAPILLARIES
SYSTÈME DE MICROMANIPULATION DOTÉ D'UN DISPOSITIF DE PROTECTION POUR CAPILLAIRES

(30) Priorität: 15.04.2010 EP 10160011
(43) Veröffentlichungstag der Anmeldung: 20.02.2013
(73) Patentinhaber: MMI AG, 8152 Glattbrugg (CH)
(72) Erfinder: TSCHANZ, Peter, 8500 Gerlikon (CH)
(74) Vertreter: Hoffmann Eitle
(86) Internationale Anmeldenummer: PCT/EP2011/055694
(87) Internationale Veröffentlichungsnummer: WO 2011/141251

(56) Entgegenhaltungen:
- EP-A1- 0 022 977
- EP-A1- 0 460 914
- EP-A2- 0 292 899
- WO-A1-99/28725
- DE-C1- 19 714 987
- JP-A- 2004 295 146
- US-A1- 2003 057 347
- US-A1- 2003 078 548

## Beschreibung

Die vorliegende Erfindung betrifft ein System zur Manipulation von Zellen unter einem Mikroskop, insbesondere ein Manipulationssystem mit einer Schutzvorrichtung für bei der Mikromanipulation von biologischem Material eingesetzte Kapillaren.

### Stand der Technik

Die molekulare Analyse reiner angereicherter Zellkulturen oder sogar einzelner Zellen ist eine wichtige Voraussetzung der medizinischen Genomik und Proteomik, und könnte in Zukunft für eine medizinische Profilierung von Patienten wesentliche Bedeutung erlangen. Bisher war dieses Ziel aufgrund maschineller sowie verfahrenstechnischer Beschränkungen bei der Zellmanipulation (z.B. der Zellsammlung oder der Mikroinjektion) nur schwer und mit nicht unerheblichem Zeitaufwand zu erreichen. Insbesondere die zur genotypischen und phänotypischen Charakterisierung notwendige Isolierung einzelner sowie seltener Zellen aus winzigen Proben stellte sich sehr schwierig dar, da einzelne Zellen vom Forschungspersonal unter einem Mikroskop erfasst und die erfasste Zelle dann manuell mithilfe von Kapillaren manipuliert werden musste. Hierzu ist es notwendig, in den Kapillaren ein genau definiertes Fluidvolumen zu bewegen, beispielsweise um einzelne Zellen oder Zellinhalte über die Kapillare zu entnehmen oder in eine Zelle Bestandteile anderer Zellen (zum Beispiel Zellkerne) zu injizieren, ohne dabei die Zelle durch zu viel abgesaugtes oder injiziertes Material zu beschädigen.

Außerdem müssen je nach Art der Zellen (zum Beispiel der Größe des zu sammelnden Materials) unterschiedliche Manipulationswerkzeuge wie zum Beispiel Kapillaren eingesetzt werden und dementsprechend ein Wechsel der Kapillaren vorgenommen werden. Selbst bei Verwendung einer Art von Kapillare, muss diese in regelmäßigen Abständen gereinigt und daher ebenfalls aus dem Mikromanipulationssystem entnommen werden. Schließlich kann es auch notwendig werden, während der Zellmanipulation freien Zugang zur biologischen Probe zu erhalten, wofür das Manipulationswerkzeug aus dem Arbeitsbereich entfernt werden muss.

All diese Vorgänge bergen jedoch die Gefahr in sich, dass das Mikromanipulationswerkzeug bei seiner Verlagerung beschädigt wird oder der Anwender durch das Werkzeug verletzt wird. Insbesondere zerbrechliche Kapillaren sind als Manipulationswerkzeuge dabei gefährdet.

Im Stand der Technik sind bisher Mikromanipulationssysteme bekannt, bei denen das Manipulationswerkzeug zum Wechseln ausgeschraubt werden kann, jedoch ansonsten ungeschützt ist. Hierbei besteht ein allgemeines Problem darin, dass nach dem Einbau des Werkzeugs das Mikromanipulationssystem wieder neu kalibriert bzw. eingemessen werden muss. Aus der EP 0 292 899 A1 ist ein Verfahren zur Mikroinjektion in Zellen bzw. zum Absaugen auf einzelnen Zellteilen oder ganzer Zellenverbände bekannt, bei dem die Kapillare in einem schwenkbaren Kapillarenhalter fixiert ist und eine axiale Bewegung der Kapillare zum Anstechen der Zellen vorgesehen ist. Weder bei der Bewegung aus dem Arbeitsbereich hinaus, noch bei einem eventuellen Kapillarenwechsel sind die Kapillare bzw. der Anwender geschützt. Aus der EP 0 229 204 A1 ist eine Kanülenschutzkappe bekannt, die jeweils einer nicht dichtenden und einer dichtenden Position auf dem Nadelansatzstück entsprechende Rastnuten aufweist, in die das Nadelansatzstück mit einer Ausstülpung eingerastet werden kann. Aus der EP 0 434 008 A1 ist eine ähnliche Schutzvorrichtung, diesmal für eine Injektionsnadel, bekannt, die auf die Injektionsnadel aufgeschoben wird, wobei sich die Nadel in einer Bohrung der Schutzvorrichtung verhaken und die Schutzvorrichtung dadurch fixieren soll. Bei beiden Schutzkappen besteht das Problem darin, dass eine mechanische Belastung auf die Kanüle bzw. die Injektionsnadel ausgeübt wird, die bei Molekularwerkzeugen wie zum Beispiel Kapillaren zu deren Bruch führen würde und somit für derartige Zwecke nicht eingesetzt werden kann. Schließlich ist aus der Druckschrift DE 197 14 987 C1 eine Glaskapillare mit einer ihr gegenüber verschiebbaren Stahlkanüle als Schutzhülse bekannt, gegen die der Gegenstand des Anspruchs 1 abgegrenzt ist.

### Darstellung der Erfindung

Es ist somit Aufgabe der vorliegenden Erfindung, ein System zur Manipulation von Zellen unter einem Mikroskop zu entwickeln, dessen Kapillare (Manipulationswerkzeug) aus ihrem Arbeitsbereich bewegt werden kann und dabei vor Beschädigung oder Zerstörung geschützt ist und gleichzeitig eine Gefährdung des Anwenders ausgeschlossen wird. Auch sollte die Kapillare wieder möglichst genau in ihre Arbeitsposition zurückgebracht werden können. Diese Aufgabe wird mithilfe eines Systems zur Manipulation von Zellen unter einem Mikroskop mit den Merkmalen des folgenden Anspruchs 1 gelöst. Bevorzugte Ausführungsformen des Manipulationssystems sind in den Unteransprüchen definiert.

Gemäß der vorliegenden Erfindung wird somit ein System zur Manipulation von Zellen unter einem Mikroskop mit den Merkmalen des Anspruchs 1 bereitgestellt. Dieses umfasst eine Kapillare als Zellmanipulationswerkzeug und eine die Kapillare schützende Schutzvorrichtung, wobei die Kapillare und die Schutzvorrichtung relativ zueinander zwischen einer die Kapillare kontaktlos schützenden Position und einer die Kapillare zur Manipulation freigebenden Position bewegbar sind. Das System umfasst einen um eine horizontale Rotationsachse schwenkbaren Schwenkarm, an dessen von der Rotationsachse entferntem Ende eine entlang dreier orthogonaler Arbeitsachsen bewegliche Kapillarenverstellung vorgesehen ist, an der die Kapillare um eine zur Rotationsachse parallele Kapillarenachse schwenkbar angebracht ist. Dadurch kann ein einfacherer Kapillarenwechsel durchgeführt werden, und sowohl die Kapillare vor Beschädigungen bewahrt, als auch der Anwender vor Verletzungen geschützt werden. Die Schutzvorrichtung berührt in der schützenden Position die Kapillare nicht, was insbesondere für sehr empfindliche Mikromanipulationswerkzeuge wie Kapillaren von wesentlicher Bedeutung ist. Vorteilhaft ist insbesondere, dass die Kapillare mithilfe einer Schwenkbewegung zusammen mit den Arbeitsachsen aus dem Arbeitsbereich entfernt werden kann, wobei durch die Ausführung mit paralleler horizontaler Rotationsachse und Kapillarenachse die Kapillare bei der Schwenkbewegung von der Probe abhebt und in einem flachen Bogen über die Arbeitsfläche wegbewegt wird. Es wäre auch denkbar, dass hierbei eine Koordinierung der Schwenkbewegung des Schwenkarms sowie der Rotation der Kapillare um die Kapillarenachse vorgenommen wird, um die flache bogenförmige Trajektorie der Kapillare zu optimieren. Durch das hiermit mögliche Wegkippen bzw. Schwenken wird der Arbeitsbereich für andere Bearbeitungsschritte oder -werkzeuge freigegeben und gleichzeitig das Verletzungsrisiko für den Anwender verringert. Des Weiteren ist es möglich, die vertikale und rotationale Bewegung der Kapillare so zu koordinieren, dass die ausgekippte bzw. ausgeschwenkte Kapillare kopfüber angeordnet ist, was die Handhabung von Flüssigkeiten erleichtert. Gleichzeitig kann aufgrund der Beibehaltung der Ausrichtung der Kapillarenverstellung die Kapillare wieder in den Ausgangszustand über der Probe zurückgebracht werden, wodurch ein erneutes Einmessen bzw. Kalibrieren minimiert werden kann. Dies trägt nicht unwesentlich zur Bedienerfreundlichkeit bei.

In einer alternativen Ausführungsform wird ein System zur Manipulation von Zellen unter einem Mikroskop mit den Merkmalen des Anspruchs 2 bereitgestellt. Dieses umfasst eine Kapillare als Zellmanipulationswerkzeug und eine die Kapillare schützende Schutzvorrichtung, wobei die Kapillare und die Schutzvorrichtung relativ zueinander zwischen einer die Kapillare kontaktlos schützenden Position und einer die Kapillare zur Manipulation freigebenden Position bewegbar sind. Weiter umfasst das System eine entlang dreier orthogonaler Arbeitsachsen bewegliche Kapillarenverstellung, an deren einem Ende ein Schwenkarm um eine horizontale Rotationsachse schwenkbar gelagert ist, an dessen von der Rotationsachse entferntem Ende die Kapillare um eine zur Rotationsachse parallele Kapillarenachse schwenkbar angebracht ist. Bei dieser Ausführungsform ist zusätzlich zum einfacheren Kapillarenwechsel und dem Schutz vor Beschädigungen oder Verletzungen von Vorteil, dass zum Entfernen der Kapillare aus dem Arbeitsbereich lediglich der Schwenkarm um die horizontale Rotationsachse verschwenkt werden muss, die Kapillarenverstellung aber dabei nicht bewegt wird. Auch hier ist es wiederum durch Koordination der Schwenkbewegung des Schwenkarms und der Drehung der Kapillare um ihre Kapillarenachse möglich, eine sehr flache bogenförmige Bewegung über die Arbeitsfläche hinweg zu erhalten.

Die Schutzvorrichtung der beiden obigen Ausführungsformen ist dabei an einem die Kapillare aufnehmenden Kapillarenhalter angebracht. Dadurch kann die Schutzvorrichtung sehr nahe an der Kapillare vorgesehen werden und somit zuverlässig und schnell vor der die Kapillare zur Manipulation freigebenden Position in die die Kapillare kontaktlos schützende Position bewegt werden.

Dabei ist es vorteilhaft, dass die Kapillare mit einem Klemmglied, dessen Durchmesser größer als jener der Kapillare ist, am Kapillarenhalter fixiert ist und der Innendurchmesser der Schutzvorrichtung im Wesentlichen gleich oder größer als der Durchmesser des Klemmglieds ist. Auf diese Weise kann die Kontaktlosigkeit in der schützenden Position auf einfache Weise sichergestellt werden, da stets ausreichend Sicherheitsraum zwischen der Kapillare und der Innenwand der Schutzvorrichtung verbleibt.

Außerdem ist die Kapillare mit einer Klemmmutter oder Klemmhülse als Klemmglied am Kapillarenhalter fixiert und die Schutzvorrichtung ist am Klemmglied einrastbar. Dies kann umgesetzt werden, indem die Schutzvorrichtung einen zur äußeren Oberfläche des Klemmglieds komplementär (passend) ausgebildeten Abschnitt aufweist. Besonders bevorzugt weist hierbei die äußere Oberfläche des Klemmglieds mutter-artige Abflachungen mit einer Schlüsselweite auf, wobei ein Bereich der Schutzvorrichtung dieser Schlüsselweite entsprechend ausgebildet ist. Auf diese Weise kann die Kapillare schnell und einfach vom Halter gelöst werden, wobei der mit der entsprechenden Schlüsselweite versehene Bereich der Schutzvorrichtung am distalen oder proximalen Ende angeordnet sein kann, um die Kapillare bei aufgeschobener bzw. zurückgezogener Schutzvorrichtung entfernen zu können.

In einer bevorzugten Ausführung der vorliegenden Erfindung ist die Schutzvorrichtung auf der Längsachse der Kapillare kontaktlos über die Kapillare schiebbar, wobei die Schutzhülse eine in Achsrichtung der Kapillare hintere Wandung mit einer Öffnung aufweist, über welche die Schutzvorrichtung auf der Längsachse der Kapillare, insbesondere entlang des Kapillarenhalters geführt wird. Auf diese Weise ist es auf einfache und schnelle Weise möglich, die Kapillare in der Schutzhülse aufzunehmen und die Kapillare vor Beschädigung und Anwender vor Verletzung zu schützen. Auch wird dadurch der Bauraum des Manipulationssystems praktisch nicht verändert. Hierbei wird in jedem Stadium der Bewegung der Schutzvorrichtung relativ zur Kapillare sichergestellt, dass keine Berührung zwischen Kapillare und Schutzvorrichtung auftreten kann und somit die Kapillare effektiv auch während der Bewegung geschützt bleibt.

Gemäß einer anderen Ausführungsform der vorliegenden Erfindung ist die Schutzvorrichtung eine kontaktlos über die Kapillare klappbare Schutzhülse. Hierbei ist die Klappbewegung eine Bewegung im Wesentlichen senkrecht zur Kapillare, das heißt die Schutzhülse wird nicht im Wesentlichen axial in Bezug auf die Kapillare sondern senkrecht zu ihrer Längsachse bewegt. Durch diese Ausführung kann bei Entfernung der Kapillare aus dem Arbeitsbereich ein effektiver Schutz der Kapillare mit wenig Aufwand sichergestellt werden, da beispielsweise die Schutzvorrichtung entsprechend der Bewegung der Kapillare auch im Zuge des Nachrüstens im Mikromanipulationssystem eingebaut werden kann. Diese Lösung ist insbesondere sehr kostengünstig durchzuführen.

Bevorzugt ist dabei die Schutzvorrichtung über eine horizontale Kippachse am Kapillarenhalter angebracht. Diese Lösung erlaubt, ebenso wie die Lösung mit der verschiebbaren Schutzvorrichtung, ein besonders schnelles Überstülpen der Schutzvorrichtung über die Kapillare und somit bei Bedarf fast sofortigen Schutz.

In einer weiteren bevorzugten Ausführungsform ist dabei die Schutzvorrichtung an einem Tragarm um eine horizontale Achse drehbar angebracht und ist durch Bewegen des Tragarms über die Kapillare überstülpbar. Diese Ausführungsform ist insbesondere für Situationen geeignet, in denen an der Kapillarenhalterung selbst keine Schutzvorrichtungen angebracht werden können, und stellt dabei einen zuverlässigen und kostengünstigen Schutz für die Kapillare sowie den Anwender bereit. Auch ist durch die strukturelle Trennung der Schutzvorrichtung von der Kapillare bzw. von der Kapillarenhalterung eine von der Kapillarenverstellung unabhängige Bewegung der Schutzvorrichtung möglich, so dass sich die Schutzvorrichtung bei Nichtgebrauch (das heißt bei Einsatz der Kapillare) außerhalb des Arbeitsbereichs des Mikroskops befindet und somit die Probenmanipulation nicht beeinträchtigen kann.

Ferner ist es bevorzugt, dass die Schutzvorrichtung relativ zur Kapillarenverstellung bzw. zur Rotationsachse des Schwenkarms ortsfest angeordnet ist. Dadurch wird es möglich, beim Ausschwenken des Schwenkarms die Kapillare direkt in die Schutzvorrichtung hinein zu kippen, so dass der Arbeitsbereich auf einfache Weise freigegeben werden kann.

In einer weiteren vorteilhaften Ausführungsform ist die Kapillarenverstellung mit den Arbeitsachsen hängend angeordnet. Im Regelfall befinden sich die Linearachsen auf bzw. über dem Mikroskoptisch, da unterhalb des Mikroskoptisches kein Bauraum für die Linearachsen vorhanden ist. Zur Bewegung des Tisches in x-Richtung wird somit seitlich zusätzlich Platz benötigt. Durch die über der Probe hängende Anordnung kann die Arbeitsfreiheit über dem Arbeitsbereich vergrößert werden und eine nahezu horizontale Bewegung (entlang eines sehr flachen Bogens) der Kapillare in und aus dem Arbeitsbereich erreicht werden.

Schließlich ist es von Vorteil, dass die Schutzvorrichtung manuell oder automatisch bewegbar ist, wobei sie hierzu entweder mithilfe eines mechanischen, eines hydraulischen oder eines pneumatischen Antriebs, oder einer Kombination dieser Antriebe, bewegbar ist. Es können somit Wartungsabläufe bzw. Kapillarentauschvorgänge auch voll automatisiert und ohne Eingriff des Anwenders durchgeführt werden.

Die vorliegende Erfindung ermöglicht es somit, nicht nur beim Kapillarenwechsel, der Montage oder der Wartung ein schnelleres und effizienteres Arbeiten zu ermöglichen, sondern bietet auch eine Vergrößerung des Arbeitsraums aufgrund der flachen Kapillarenführung, eine Verringerung des Gewichts sowie des Bauraums, eine Erhöhung der Zuverlässigkeit aufgrund der einfachen Struktur des Manipulationssystems und somit eine Verringerung der damit verbundenen Kosten. Dies alles wird gekrönt durch eine erhebliche Erhöhung der Sicherheit des Systems, die eine Beschädigung der Kapillare effektiv verhindert und die Verletzungsgefahr des Anwenders drastisch verringert.

### Kurze Beschreibung der Zeichnungen

Figur 1 ist eine schematische Schnittansicht eines Systems zur Manipulation von Zellen unter einem Mikroskop, bei dem die Kapillare in die Schutzvorrichtung eingeklappt werden kann;
Figur 2 ist eine zur Figur 1 alternative Ausführungsform, bei der die Schutzvorrichtung auf der Kapillarenhalterung verschiebbar angeordnet ist;
Figur 3 zeigt eine weitere Ausführungsform des Manipulationssystems, bei der die Schutzvorrichtung auf einer die Kapillare an der Halterung fixierenden Klemmmutter einrastbar ist, wobei links in der Figur ein Schnitt entlang der Linie A-A dargestellt ist;
Figur 4 zeigt eine schematische Ansicht einer Ausführungsform des Mikromanipulationssystems der vorliegenden Erfindung, bei der das Kapillaren zusammen mit seinem Verstellantrieb in bzw. aus dem Arbeitsbereich schwenkbar ist;
Figur 5 zeigt eine alternativ bevorzugte Ausführungsform des Mikromanipulationssystems, bei der im Vergleich zu Figur 4 nur die Kapillare aus dem Arbeitsbereich verschwenkt wird, die Kapillarenverstellung jedoch ortsfest bleibt;
Figur 6 ist eine Ausführungsform des erfindungsgemäßen Manipulationssystems, in der die Schutzvorrichtung auf die Kapillare aufgeschwenkt wird; und
Figur 7 ist eine schematische Ansicht einer weiteren Ausführungsform der vorliegenden Erfindung, bei der die Schutzvorrichtung über eine Kippachse an der Kapillarenhalterung befestigt ist.

### Wege zur Ausführung der Erfindung

Im Folgenden werden bevorzugte Ausführungsformen der vorliegenden Erfindung unter Bezugnahme auf die Zeichnungen beschrieben. Zunächst wird zum besseren Verständnis des Einsatzgebiets der Erfindung die automatisierte Isolierung beliebiger einzelner oder seltener Zellen beschrieben, welche in drei Schritten abläuft: Zellerkennung; Zellsammlung und Zellabgabe.

Die Erfinder haben zu diesem Zweck ein System bereitgestellt, das auf einem inversen Mikroskop (Umkehrmikroskop), einer Zellerkennungseinheit, einer automatisierten Kapillarverstellung, einer automatisierten Pumpe und einem Verschiebetisch basiert. Die Sammlung und Abgabe werden mithilfe einer hochpräzisen Pumpe gesteuert, die es erlaubt, Verfahrensabläufe festzulegen, die Nanoliter-Volumen eines Pumpmediums für den Abtrennvorgang der Zelle einsetzen und so die Grundlage schaffen für eine am Verfahrensende durchzuführende molekulare Analyse des Zellmaterials in lediglich 1 Microliter Medium.

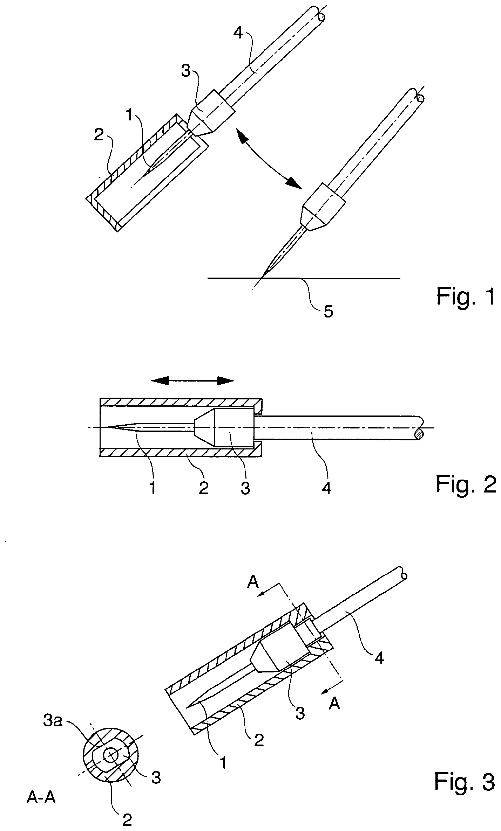

Die (nicht haftenden) Zellen erfahren dabei keinerlei mechanische Belastungen: die Zellsammlung erfolgt lediglich aufgrund des die Zelle umgebenden Flüssigkeitsflusses. Unter optimalen Bedingungen können selbst teilweise anhaftende Zellen auf diese Weise gesammelt werden. Es besteht kein Kontakt zwischen den Zellen und der zur Sammlung eingesetzten Kapillare. Der Kapillardurchmesser kann wesentlich größer sein als jener der Zelle. Zum Beispiel können Zellen mit 6 µm Durchmesser effizient mit einer Kapillare von 40 pm Durchmesser gesammelt werden.
Die Abgabe der Zellen kann auf verschiedene Zielträger (deposits) erfolgen. Sogenannte "Grid deposits" sind dabei entweder raster-artige Punktablagen (wie zum Beispiel AmpliGrid®) oder raster-artig angeordnete kleine Behälter (wie die IBIDI Probentaschen-Objektträger).
Einzelpunktablagen können aus einem transparenten Deckel, einem PCR-Röhrchen oder einer Mikrofluid-Vorrichtung bestehen. Wie auch immer der Zielträger beschaffen ist, seine Größe sollte im Allgemeinen nicht die Größe von Standard-Objektträgern überschreiten, damit diese in die Mehrfachhalterung der Objektträger auf dem Verschiebetisch eingesetzt werden können.
Die Sammlung und Abgabe der Zellen kann auf verschiedene Arten erfolgen: von der manuellen bis zur voll automatisierten Betriebsart mit Zellerkennung. Jedoch ist es selbst bei der manuellen Betriebsart nicht notwendig, irgendeine Komponente des Systems (Mikroskop, Pumpe, Kapillare) von Hand zu bedienen: alle Betriebsvorgänge werden durch den Benutzer vom PC aus gestartet.
Im Folgenden werden Ausführungsbeispiele des Manipulationssystems anhand der Figuren beschrieben. In Figur 1 ist zunächst allgemein eine Kapillare 1 als Mikromanipulationswerkzeug dargestellt, welches mithilfe einer Klemmmutter 3 als Klemmglied an einem ein entsprechendes Schraubengewinde aufweisenden Halter 4 befestigt ist. Alternativ kann das Klemmglied anstatt durch die Klemmmutter 3 auch durch eine nicht gezeigte Klemmhülse mit Fixierschraube realisiert werden, wobei dann der Halter nicht mit einem Gewinde versehen sein muss. Der Halter ist an einem weiter nicht dargestellten drei- oder mehrachsigen Verschiebevorrichtung befestigt, mithilfe derer die Kapillare über die Probe bewegt und zur Manipulation abgesenkt werden kann, so dass die Spitze der Kapillare in einer Arbeitsebene 5 liegt. Typische Kapillarendurchmesser bewegen sich im Bereich von 100 pm oder weniger (zum Beispiel Kapillaren mit einem Durchmesser von 40 µm zur Aufnahme einzelner Zellen der Größenordnung unter 10 µm), und sind somit gegenüber Beschädigungen sehr empfindlich. Gleichzeitig können die aus Glas bestehenden Kapillaren bei unachtsamer Handhabung den Anwender verletzen. Aus diesem Grund kann, wie in Figur 1 durch den Pfeil angegeben ist, die Kapillare aus der Arbeitsebene, in der die Manipulation freigegeben ist, in eine Schutzposition bewegt werden, in der die Kapillare 1 durch einen hülsenartigen Schutz 2 vor Beschädigung und Gefährdung des Anwenders geschützt ist. Dabei kommt der hülsenartige Schutz 2 mit der Kapillare 1 nicht in Kontakt.

In Figur 2 ist eine Gestaltung des Manipulationssystems der Erfindung dargestellt, bei der eine Schutzhülse 2 auf der Längsachse der Kapillare verschiebbar am Kapillarenhalter 4 angebracht ist. Die Hülse 2 ist dabei zur Seite der Kapillarenspitze offen und besitzt in der gegenüber liegenden Endwand eine Öffnung, die den Kapillarenhalter 4 so umschließt, dass dieser die Hülse sicher in axialer Richtung führt. Der Innendurchmesser der Hülse 2 kann dabei so gewählt werden, dass er geringfügig größer als der Außendurchmesser der die Kapillare 1 im Halter 4 fixierenden Klemmmutter 3 ist, so dass zwischen ihnen eine die axiale Verschiebung zulassende Passung vorhanden ist. Im Gebrauch kann somit die Schutzhülse 2 auf einfache und schnelle Weise auf die Kapillare 1 geschoben werden (kontaktlos schützende Position) bzw. von der Kapillare 1 zurückgezogen werden (die Manipulation freigebende Position). Figur 3 zeigt eine Gestaltung der Schutzhülse 2, bei der diese an der Klemmmutter 3 (Klemmglied) der Kapillare einrasten kann. Hierbei ist die Außenseite der Klemmmutter wie links in der Figur gezeigt mit zwei gegenüberliegenden Abflachungen 3a versehen, und die so gebildete Schlüsselweite der Klemmmutter 3 ist auch in der distalen Öffnung der Endwand der Schutzhülse entsprechend ausgebildet. Auf diese Weise kann die Schutzhülse als Schlüssel verwendet werden, mithilfe dessen sich die Klemmmutter 3, und somit die Kapillare 1, vom Kapillarenhalter 4 abschrauben lässt. Dabei bleibt die Kapillare stets von der Schutzhülse abgedeckt und geschützt.

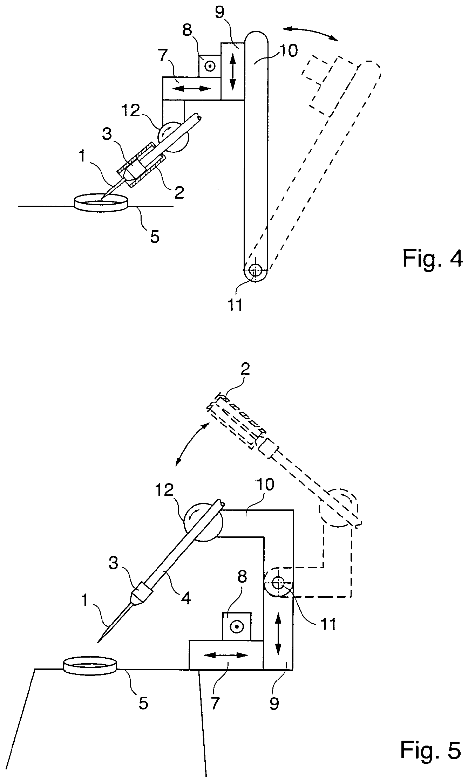

In Figur 4 ist eine Ausführungsform des erfindungsgemäßen Manipulationssystems gezeigt, bei dem die Kapillare in einer flachen Bogenbewegung über der Arbeitsebene von der Probe entfernt werden kann. Die bereits beschriebene Kapillare 1 wird dabei von einer Schutzhülse 2, wie sie zum Beispiel in Figur 2 dargestellt wurde, umgeben, die auf dem Kapillarenhalter 4 verschiebbar angeordnet ist. Der Kapillarenhalter 4 selbst ist über eine Kapillarenachse 12 in einer vertikalen Ebene senkrecht zur Arbeitsebene 5 drehbar an einer dreiachsigen Verstelleinrichtung angebracht, mithilfe derer die Kapillare entlang der X-Achse 7 und der Y-Achse 8 parallel zur Arbeitsebene 5 sowie in der vertikalen Z-Richtung 9 bewegt werden kann. Die genannte Anordnung ist an einem Ende eines Schwenkarms 10 befestigt, der an seinem anderen Ende über eine horizontale Rotationsachse 11 schwenkbar gelagert ist. Zur Entfernung der Kapillare 1 von der Probe, das heißt aus der Arbeitsebene 5, wird der Schwenkarm 10 um die Rotationsachse 11 verschwenkt. Die Rotationsachse 11 befindet sich dabei geeigneter Weise in einem derartigen Abstand unterhalb der Arbeitsebene 5, dass das entgegengesetzte Ende des Schwenkarms, an dem die Verstelleinrichtung 7, 8, 9 und die Kapillare 1 mit Klemmmutter 3 und Halterung 4 befestigt ist, in einem möglichst flachen Bogen vom Arbeitsbereich in der Ebene 5 wegbewegt wird. Mit anderen Worten durchläuft das der Rotationsachse 11 entgegen gesetzte Ende des Schwenkarms 10 lediglich den oberen Teil des Kreises, der von dem genannten Ende bei einer vollständigen Rotation um die Rotationsachse 11 beschrieben wird. Die Kapillarenhalterung 4 kann dabei entweder relativ zum Schwenkarm 10 fixiert bleiben, oder aber geeignet mit der Verschwenkung um die Achse 11 synchronisiert werden. Im ersten Fall werden also weder die Verstelleinrichtung 7, 8, 9 betätigt, noch eine Drehung um die Kapillarenachse 12 durchgeführt, so dass bei Zurückschwenken des Schwenkarms 10 die Kapillare 1 sich wieder in exakt derselben Position in Bezug zur Probe befindet. Ein aufwendiges Einmessen bzw. Nachjustieren entfällt somit. Wird beim Verschwenken des Schwenkarms 10 die Kapillarenhalterung 4 um die Achse 12 gedreht, kann die Kanüle 1 im ausgeschwenkten Zustand (in Figur 4 gestrichelt gezeigt) in eine kopfüber angeordnete Position gebracht werden, in der eine Handhabung der Flüssigkeit in der Kanüle bzw. dem darin angeschlossenen Pumpsystem besonders leicht gehandhabt werden kann.

In Figur 5 ist eine alternative Ausführungsform des Manipulationssystems zur Mikroskopanwendung gezeigt, die sich von der Ausführungsform der Figur 4 darin unterscheidet, dass nun beim Verschwenken lediglich der Schwenkarm rotiert, nicht jedoch die Verstelleinrichtung 7, 8, 9, welche ortsfest bleibt. Im Detail ist die Kapillare 1 mit ihrem Halter 4 wie zuvor drehbar um eine Kapillarenachse 12 gelagert, welche diesmal jedoch horizontal durch ein Ende eines Schwenkarms 10 geht. Am anderen Ende des vorliegend abgewinkelt, in Form eines Winkeleisens, ausgebildeten Schwenkarms 10 ist um eine Rotationsachse 11, die horizontal durch die Verstellvorrichtung 7, 8, 9 führt, schwenkbar gelagert. In der eingeschränkten Position (durchgezogene Linie in Figur 5) ist die Kapillare 1 freigegeben, um auf der Arbeitsebene 5 die biologische Probe zu manipulieren, während sie in der ausgeschwenkten Position (in Figur 5 gestrichelt gezeigt) in eine Schutzvorrichtung 2 eingeführt wird, welche die Kapillare 1 berührungslos vor Beschädigung schützt. Hierzu kann die Schutzvorrichtung 2, beispielsweise eine an einer Unterseite offene Schutzhülse, an der Verstelleinrichtung, welche ortsfest verbleibt, befestigt werden, vorzugsweise in Fixierung an der Höhenverstellung 9). In diesem Ausführungsbeispiel befindet sich die Verstellvorrichtung 7, 8, 9 auf dem Mikroskoptisch, wobei die Lage der Rotationsachse 11 auch hier so tief wie möglich, das heißt so nah wie möglich an der Arbeitsebene 5 gewählt ist, damit das Ausschwenken der Kapillare 1 mithilfe des Schwenkarms 10 die Kapillare in einem möglichst flachen Bogen über die Arbeitsfläche aus dem Probenbereich heraus führt. Es ist aber ebenso denkbar, dass sich die Verstellvorrichtung auch unterhalb des Mikroskoptisches befindet.

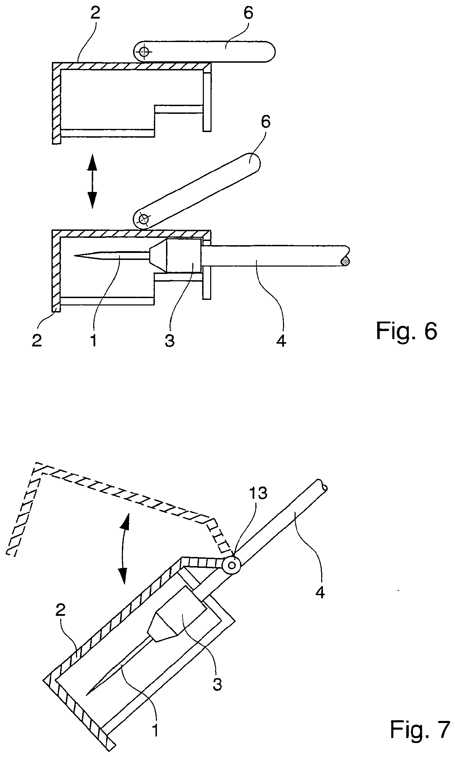

In Figur 6 ist eine weitere Ausgestaltung eines Manipulationssystems gezeigt, in der eine Schutzvorrichtung 2 an einem Tragarm 6 angebracht ist, der unabhängig von der Kapillarenhalterung 4 bewegt wird. Die Schutzvorrichtung 2 ist dabei über eine Achse schwenkbar am Tragarm befestigt, so dass die Schutzvorrichtung 2 korrekt ausgerichtet auf die Kapillare 1 aufgeschwenkt werden kann. Die Schutzvorrichtung 2 ist dabei so geformt, dass sie die Kapillare 1 zusammen mit der Klemmmutter 3 umschließt und vor Beschädigung schützt. Die Schutzhülse 2 kann somit unabhängig von Verstellbewegungen der Kapillare 1 bzw. der Kapillarenhalterung 4 an die Kapillare heran- oder weggefahren werden. Beispielsweise kann diese Heran- oder Wegfahrbewegung zeitsynchron oder zeitversetzt mit einer horizontalen Verschwenkung des Schwenkarms 10 (Figur 4 und Figur 5) erfolgen.
In Figur 7 ist schließlich eine weitere mögliche Ausführungsform eines Manipulationssystems gezeigt, bei dem die Schutzvorrichtung 2 einfach über eine Kippachse 13 an der Kapillarenhalterung 4 aufklappbar befestigt ist. Diese besonders einfach zu realisierende Konfiguration zeichnet sich insbesondere durch die Geschwindigkeit aus, mit der die Kapillare 1 aus dem die Manipulation erlaubenden Zustand in einen vor Beschädigung geschützten Zustand bewegt werden kann.

## Patentansprüche

1. System zur Manipulation von Zellen unter einem Mikroskop, umfassend eine Kapillare (1) als Zellmanipulationswerkzeug und eine die Kapillare schützende Schutzvorrichtung (2), wobei die Kapillare (1) und die Schutzvorrichtung (2) relativ zueinander zwischen einer die Kapillare kontaktlos schützenden Position und einer die Kapillare zur Manipulation freigebenden Position bewegbar sind,
**dadurch gekennzeichnet, dass** das System einen um eine horizontale Rotationsachse (11) schwenkbaren Schwenkarm (10) umfasst, an dessen von der Rotationsachse entferntem Ende eine entlang dreier orthogonaler Arbeitsachsen (7, 8, 9) bewegliche Kapillarenverstellung vorgesehen ist, an der die Kapillare (1) um eine zur Rotationsachse (11) parallele Kapillarenachse (12) schwenkbar angebracht ist,
wobei die Schutzvorrichtung an einem die Kapillare (1) aufnehmenden Kapillarenhalter (4) angebracht ist
wobei die Kapillare (1) mit einer Klemmmutter als Klemmglied (3) am Kapillarenhalter (4) fixiert ist und die Schutzvorrichtung (2) am Klemmglied (3) einrastbar ist,
wobei die äußere Oberfläche der Klemmmutter (3) Abflachungen (3a) mit einer Schlüsselweite aufweist und ein Bereich der Schutzvorrichtung (2) dieser Schlüsselweite entsprechend ausgebildet ist.

2. System zur Manipulation von Zellen unter einem Mikroskop, umfassend eine Kapillare (1) als Zellmanipulationswerkzeug und eine die Kapillare schützende Schutzvorrichtung (2), wobei die Kapillare (1) und die Schutzvorrichtung (2) relativ zueinander zwischen einer die Kapillare kontaktlos schützenden Position und einer die Kapillare zur Manipulation freigebenden Position bewegbar sind,
**gekennzeichnet durch** eine entlang dreier orthogonaler Arbeitsachsen (7, 8, 9) bewegliche Kapillarenverstellung umfassend, an deren einem Ende ein Schwenkarm (10) um eine horizontale Rotationsachse (11) schwenkbar gelagert ist, an dessen von der Rotationsachse entferntem Ende die Kapillare (1) um eine zur Rotationsachse (11) parallele Kapillarenachse (12) schwenkbar angebracht ist, wobei die Schutzvorrichtung an einem die Kapillare (1) aufnehmenden Kapillarenhalter (4) angebracht ist,
wobei die Kapillare (1) mit einer Klemmmutter als Klemmglied (3) am Kapillarenhalter (4) fixiert ist und die Schutzvorrichtung (2) am Klemmglied (3) einrastbar ist,
wobei die äußere Oberfläche der Klemmmutter (3) Abflachungen (3a) mit einer Schlüsselweite aufweist und ein Bereich der Schutzvorrichtung (2) dieser Schlüsselweite entsprechend ausgebildet ist.

3. Manipulationssystem nach Anspruch 1 oder 2, wobei die Kapillare (1) mit einer Klemmmutter oder Klemmhülse als Klemmglied (3), dessen Durchmesser größer als jener der Kapillare ist, am Kapillarenhalter (4) fixiert ist und der Innendurchmesser der Schutzvorrichtung (2) im Wesentlichen gleich oder größer als der Durchmesser des Klemmglieds (3) ist.

4. Manipulationssystem nach einem der Ansprüche 1 bis 3, wobei die Schutzvorrichtung (2) entlang der Längsachse der Kapillare (1) kontaktlos über die Kapillare schiebbar oder stülpbar, wobei die Schutzvorrichtung (2) eine in Achsrichtung der Kapillare (1) hintere Wandung mit einer Öffnung aufweist, über welche die Schutzvorrichtung auf der Längsachse der Kapillare geführt wird.

5. Manipulationssystem nach einem der Ansprüche 1 bis 3, wobei die Schutzvorrichtung eine kontaktlos über die Kapillare (1) klappbare Schutzhülse (2) ist.

6. Manipulationssystem nach einem der Ansprüche 1 bis 5, wobei die Schutzvorrichtung (2) über eine horizontale Kippachse (13) am Kapillarenhalter (4) angebracht ist.

7. Manipulationssystem nach nach einem der Ansprüche 1 bis 5, wobei die Schutzvorrichtung (2) an einem Tragarm (6) um eine horizontale Achse drehbar angebracht ist und durch Bewegen des Tragarms über die Kapillare (1) überstülpbar ist.

8. Manipulationssystem nach einem der vorangehenden Ansprüche, wobei die Schutzvorrichtung (2) relativ zur Kapillarenverstellung bzw. zur Rotationsachse (11) des Schwenkarms ortsfest angeordnet ist.

9. Manipulationssystem nach einem der Ansprüche 1 bis 8wenn rückbezogen auf Anspruch 1, wobei die Kapillarenverstellung mit den Arbeitsachsen (7, 8, 9) hängend angeordnet ist.

10. Manipulationssystem nach einem der Ansprüche 1 bis 9, wobei die Schutzvorrichtung (2) mithilfe eines mechanischen, eines hydraulischen oder pneumatischen Antriebs bewegbar ist.

## Claims

1. System for manipulating cells under a microscope, comprising a capillary (1) as cell manipulation tool and a protective device (2) protecting the capillary, wherein the capillary (1) and the protective device (2) are moveable relative to one another between a position in which the capillary is protected without contact and a position releasing the capillary for manipulation,
**characterised in that** the system comprises a swivel arm (10), swivellable around a horizontal axis of rotation (11), at the end of which, opposite the axis of rotation, a capillary adjustment means, moveable along three orthogonal working axes (7, 8, 9), is provided, to which the capillary (1) is attached so as to be swivellable around a capillary axis (12) parallel to the axis of rotation (11),
wherein the protective device is attached to a capillary holder (4) holding the capillary (1),
wherein the capillary (1) is fixed to the capillary holder (4) with a clamping nut serving as clamping member (3) and the protective device (2) can be clipped onto the clamping member (3),
wherein the outer surface of the clamping nut (3) has flattenings (3a) with a width across flats and a region of the protective device (2) is designed to conform to this width across flats.

2. System for manipulating cells under a microscope, comprising a capillary (1) as cell manipulation tool and a protective device (2) protecting the capillary, wherein the capillary (1) and the protective device (2) are moveable relative to one another between a position in which the capillary is protected without contact and a position releasing the capillary for manipulation,
**characterised by** a capillary adjustment means, moveable along three orthogonal working axes (7, 8, 9), at one end of which a swivel arm (10) is mounted so as to be swivellable around a horizontal axis of rotation (11), at the end of which, opposite the axis of rotation, the capillary (1) is attached so as to be swivellable around a capillary axis (12) parallel to the axis of rotation (11), wherein the protective device is attached to a capillary holder (4) holding the capillary (1),
wherein the capillary (1) is fixed to the capillary holder (4) with a clamping nut serving as clamping member (3) and the protective device (2) can be clipped onto the clamping member (3),
wherein the outer surface of the clamping nut (3) has flattenings (3a) with a width across flats and a region of the protective device (2) is designed to conform to this width across flats.

3. Manipulation system according to claim 1 or 2, wherein the capillary (1) is fixed to the capillary holder (4) with a clamping nut or clamping sleeve, serving as a clamping member (3), the diameter of which is greater than that of the capillary, and the inner diameter of the protective device (2) is substantially equal to or greater than the diameter of the clamping member (3).

4. Manipulation system according to one of the claims 1 to 3, wherein the protective device (2) can be pushed or slipped over the capillary, along the longitudinal axis of the capillary (1), without making contact, wherein the protective device (2) has a rear wall, in the axial direction of the capillary (1), with an opening via which the protective device is guided along the longitudinal axis of the capillary.

5. Manipulation system according to one of the claims 1 to 3, wherein the protective device is a protective sleeve (2) which can be folded over the capillary (1) without making contact.

6. Manipulation system according to one of the claims 1 to 5, wherein the protective device (2) is attached to the capillary holder (4) via a horizontal tilting axis (13).

7. Manipulation system according to one of the claims 1 to 5, wherein the protective device (2) is attached to a supporting arm (6) so as to be rotatable around a horizontal axis and can be slipped over the capillary (1) by moving the supporting arm.

8. Manipulation system according to one of the preceding claims, wherein the protective device (2) is arranged fixed in position relative to the capillary adjustment means or the axis of rotation (11) of the swivel arm.

9. Manipulation system according to one of the claims 1 to 8, insofar as referring back to claim 1, wherein the capillary adjustment means with the working axes (7, 8, 9) is arranged in a suspended manner.

10. Manipulation system according to one of the claims 1 to 9, wherein the protective device (2) can be moved with the aid of a mechanical, hydraulic or pneumatic drive.

## Revendications

1. Système de manipulation de cellules sous un microscope, comprenant un capillaire (1) en tant qu'outil de manipulation de cellule et un dispositif de protection (2) protégeant le capillaire, dans lequel le capillaire (1) et le dispositif de protection (2) sont déplaçables l'un par rapport à l'autre entre une position protégeant sans contact le capillaire et une position libérant le capillaire pour la manipulation,
**caractérisé en ce que** le système comprend un bras pivotant (10) pouvant pivoter autour d'un axe de rotation horizontal (11), à laquelle extrémité éloignée de l'axe de rotation, un réglage de capillaire mobile le long de trois axes de travail orthogonaux (7, 8, 9) est prévu, au niveau duquel le capillaire (1) est monté de manière pivotante autour d'un axe de capillaire (12) parallèle à l'axe de rotation (11),
dans lequel le dispositif de protection est monté au niveau d'un porte-capillaire (4) recevant le capillaire (1),
dans lequel le capillaire (1) est fixé avec un écrou de serrage en tant qu'organe de serrage (3) au niveau du porte-capillaire (4) et le dispositif de protection (2) peut s'enclencher sur l'organe de serrage (3),
dans lequel la surface extérieure de l'écrou de serrage (3) présente des aplatissements (3a) avec une ouverture de clé et une zone du dispositif de protection (2) est réalisée de manière correspondante à cette ouverture de clé.

2. Système de manipulation de cellules sous un microscope, comprenant un capillaire (1) en tant qu'outil de manipulation de cellule et un dispositif de protection (2) protégeant le capillaire, dans lequel le capillaire (1) et le dispositif de protection (2) sont déplaçables l'un par rapport à l'autre entre une position protégeant sans contact le capillaire et une position libérant le capillaire pour la manipulation,
**caractérisé en ce qu'**il comprend un réglage de capillaire mobile le long de trois axes de travail orthogonaux (7, 8, 9), à laquelle une extrémité, un bras pivotant (10) est logé de manière pivotante autour d'un axe de rotation horizontal (11), à laquelle extrémité éloignée de l'axe de rotation, le capillaire (1) est monté de manière pivotante autour d'un axe de capillaire (12) parallèle à l'axe de rotation (11), dans lequel le dispositif de protection est monté au niveau d'un porte-capillaire (4) recevant le capillaire (1),
dans lequel le capillaire (1) est fixé avec un écrou de serrage en tant qu'organe de serrage (3) au niveau du porte-capillaire (4) et le dispositif de protection (2) peut s'enclencher sur l'organe de serrage (3),
dans lequel la surface extérieure de l'écrou de serrage (3) présente des aplatissements (3a) avec une ouverture de clé et une zone du dispositif de protection (2) est réalisée de manière correspondante à cette ouverture de clé.

3. Système de manipulation selon la revendication 1 ou 2, dans lequel le capillaire (1) est fixé avec un écrou de serrage ou douille de serrage en tant qu'organe de serrage (3), dont le diamètre est supérieur à celui du capillaire, au niveau du porte-capillaire (4) et le diamètre intérieur du dispositif de protection (2) est sensiblement égal ou supérieur au diamètre de l'organe de serrage (3).

4. Système de manipulation selon l'une quelconque des revendications 1 à 3, dans lequel le dispositif de protection (2) peut être retourné ou poussé sur le capillaire sans contact le long de l'axe longitudinal du capillaire (1), dans lequel le dispositif de protection (2) présente une paroi arrière dans la direction d'axe du capillaire (1) avec une ouverture, via laquelle le dispositif de protection est guidé sur l'axe longitudinal du capillaire.

5. Système de manipulation selon l'une quelconque des revendications 1 à 3, dans lequel le dispositif de protection est une douille de protection (2) pliable sans contact sur le capillaire (1).

6. Système de manipulation selon l'une quelconque des revendications 1 à 5, dans lequel le dispositif de protection (2) est monté au niveau du porte-capillaire (4) via un axe de basculement (13) horizontal.

7. Système de manipulation selon l'une quelconque des revendications 1 à 5, dans lequel le dispositif de protection (2) est monté de manière rotative autour d'un axe horizontal au niveau d'un bras support (6) et peut coiffer le capillaire (1) par déplacement du bras support.

8. Système de manipulation selon l'une quelconque des revendications précédentes, dans lequel le dispositif de protection (2) est agencé de manière fixe par rapport au réglage de capillaire ou à l'axe de rotation (11) du bras pivotant.

9. Système de manipulation selon l'une quelconque des revendications 1 à 8, lorsqu'il est fait référence à la revendication 1, dans lequel le réglage de capillaire est agencé de manière suspendue avec les axes de travail (7, 8, 9).

10. Système de manipulation selon l'une quelconque des revendications 1 à 9, dans lequel le dispositif de protection (2) est déplaçable à l'aide d'un entraînement mécanique, d'un entraînement hydraulique ou d'un entraînement pneumatique.
